# EUROPÄISCHE PATENTSCHRIFT

(11) **EP 1 716 022 B1**
(45) Veröffentlichungstag und Bekanntmachung des Hinweises auf die Patenterteilung: **06.02.2008**
(21) Anmeldenummer: 05701303.9
(22) Anmeldetag: 02.02.2005
(51) Int. Cl.: B60R 21/20

(54) **AIRBAGABDECKUNG FÜR EINEN AIRBAG EINES KRAFTFAHRZEUGS**
AIRBAG COVER FOR AN AIRBAG IN A MOTOR VEHICLE
RECOUVREMENT DE SAC GONFLABLE POUR VEHICULE A MOTEUR

(30) Priorität: 20.02.2004 DE 102004009914
(43) Veröffentlichungstag der Anmeldung: 02.11.2006
(73) Patentinhaber: Johnson Controls Interiors GmbH & Co. KG, 47929 Grefrath (DE)
(72) Erfinder: NIESSNER, Harry, 71034 Böblingen (DE); REITER, Friedrich, 71069 Sindelfingen (DE); SIGLOCH, Andreas, 71069 Sindelfingen (DE); FEHR, Berthold, 45143 Essen (DE); MEYER, Stephan, 44892 Bochum (DE); RÖSNICK, Franz, Willi, 40723 Hilden (DE); Lippert, Martin, 40667 Meerbusch (DE)
(74) Vertreter: Bulling, Alexander
(86) Internationale Anmeldenummer: PCT/EP2005/001010
(87) Internationale Veröffentlichungsnummer: WO 2005/090131

(56) Entgegenhaltungen:
- EP-A- 1 112 899
- EP-A- 1 238 872
- WO-A-01/42060
- WO-A-03/082632
- WO-A-20/04009410
- US-A- 3 794 349
- US-A1- 2003 178 818
- US-B1- 6 364 345

## Beschreibung

Die Erfindung betrifft eine Airbagabdeckung für einen Airbag eines Kraftfahrzeugs.

Solche Airbagabdeckungen verschließen einen Aufnahmeraum für das Airbagmodul, welches sich im Falle einer Kollision des Fahrzeuges explosionsartig aufbläst und hierbei die Airbagabdeckung wegreißt, das heißt öffnet. In geschlossenem Zustand werden die klappenartigen Airbagabdeckungen über Sollrissbereiche oder Sollbruchstellen an den angrenzenden Verkleidungsteilen des Fahrzeugs gehalten, sodass die Innenraumverkleidung eine im Wesentlichen geschlossene Oberfläche aufweist. Um eine Verletzung der Insassen des Fahrzeuges beim Auslösen des Airbags zu vermeiden, werden Airbagabdeckungen einseitig über Verbindungsmittel an der Innenraumverkleidung befestigt. Hierdurch öffnet eine Airbagabdeckung nach dem Reißen der Sollrissbereiche in einer Schwenkbewegung beispielsweise nach oben gegen die Windschutzscheibe des Fahrzeuges. Für die Insassenschutzvorrichtung mit gasbetriebenen Airbags ist es erforderlich, dass einerseits die Öffnung solcher Abdeckungen für Airbags schnell erfolgt und dennoch keine Verletzungsgefahr durch umherschleudernde Abdeckungsteile besteht. Da die Öffnung der klappenartigen Abdeckung durch den explosionsartig aufgeblasenen Airbag selbst erfolgt, können hohe Kräfte beim Aufreißen und Öffnen der Airbagabdeckung entstehen. Dabei besteht die Gefahr einer Beschädigung der Windschutzscheibe oder anderer Bauteile im Innenraum der Fahrgastzelle.

Aus der deutschen Offenlegungsschrift DE 197 35 438 A1 ist eine derartige Airbagabdeckung für ein Insassen-Rückhaltesystem (Airbag) bekannt, bei welcher ein Verstärkungsblech der Klappe mittels eines blechartigen Verbindungselements an der Innenraumverkleidung des Fahrzeuges befestigt ist. Das Blechband weist hier ein Verformungsteil auf, um beim explosionsartigen Öffnen der Klappe diese zunächst linear zu bewegen, das heißt in Öffnungsrichtung gleichmäßig anzuheben, und dann nach Verformen des Verformungsteils die Klappe schwenkend ganz zu öffnen. Durch den Verformungsteil des Blechbandes wird zwar die Öffnungsbewegung der Klappe etwas gedämpft, es besteht jedoch weiterhin die Gefahr, dass die zum Abreißen der Klappe erforderlichen Kräfte zu einer unkontrollierten Schwenk-Bewegung aufgrund einer stark erhöhten Beschleunigung führen. Hierbei kann es zu Beschädigungen der Windschutzscheibe oder angrenzender Verkleidungsteile der Innenraumverkleidung kommen.

In dem deutschen Patent DE 42 14 662 C2 ist eine Aufprallschutzeinrichtung für Insassen mit einer Abdeckung beschrieben, bei welcher die Abdeckung über ein deformierbares Anlenkelement an der Innenraumverkleidung befestigt ist. Dieses deformierbare Anlenkelement weist eine Sollbiegestelle und einen muldenförmigen Bereich auf, sodass die Öffnungsbewegung um eine Schwenkachse derart erfolgt, dass angrenzende Verkleidungsteile hierbei nicht im Weg sind. Beim Aufreißen der Airbag-Klappe und dem anschließenden Wegschwenken besteht auch hier das Risiko einer Zerstörung der Windschutzscheibe, da die erhöhten Aufreißkräfte direkt über die Schwenkachse in eine überproportionale Beschleunigung der Klappe umgesetzt werden.

Aus der US 3,794,349 A ist eine Airbagabdeckung gemäß den Merkmalen des Oberbegriffs des Anspruchs 1 bekannt geworden. Eine ähnliche Airbagabdeckung zeigt die WO 2004/009410 A.

Demgegenüber ist es die Aufgabe der vorliegenden Erfindung, eine Airbagabdeckung für einen Airbag eines Kraftfahrzeugs bereitzustellen, bei dem der Öffnungsvorgang besser steuerbar ist.

Diese Aufgabe wird mit einer Airbagabdeckung mit den Merkmalen gemäß Anspruch 1 gelöst. Vorteilhafte Ausgestaltungen und Weiterbildungen der Erfindung sind Gegenstand der abhängigen Ansprüche.

Erfindungsgemäß weist die Airbagabdeckung eine Klappe auf, welche beim Auslösen des Airbags geöffnet wird und dabei über ein Verbindungselement gelenkartig an einem Verkleidungsteil der Innenraumverkleidung des Kraftfahrzeugs gehalten wird, wobei das Verbindungselement mindestens ein Scharnier ist, welches mindestens zwei Scharnierachsen X, Y aufweist. Das Klappenscharnier mit zwei Scharnierachsen ist derart ausgebildet und montiert, dass beim Beginn der Öffnungsphase des Airbags ein Teil der in Öffnungsrichtung B wirkenden Betätigungskräfte in eine Kraftkomponente quer zur Öffnungsrichtung B umgeleitet wird. Die Querkraftkomponente wirkt zum verbesserten und schnellerem Abreißen der Klappe in eine Richtung weg von den dem Scharnier gegenüberliegenden Sollrissbereichen. Durch das doppelgelenkige Scharnier wird die Klappe der Airbagabdeckung beim Öffnen somit nicht einfach um eine einzige Anlenkungsachse aufgestoßen, sondern zunächst wird eine Kraftkomponente quer zur Öffnungsrichtung erzeugt, sodass das Aufreißen der Sollrissbereiche, welche zwischen der Klappe und den angrenzenden Verkleidungsteilen vorgesehen sind, hierdurch unterstützt wird. Das Öffnen der erfindungsgemäßen Airbagabdeckung ist damit schneller als bei herkömmlichen Systemen. Außerdem wird hierdurch eine überproportionale Beschleunigung der Klappe und die Gefahr einer Beschädigung von Teilen oder Verletzung von Fahrzeuginsassen weiter vermindert. Durch die Hebelarme des Scharniers mit mindestens zwei Scharnierachsen wird ein Teil der Betätigungskräfte beim Aufreißen der Airbag-Klappe in Querkräfte umgesetzt und für das Aufreißen verbraucht, sodass die resultierende Schleuderkraft beim Aufschwenken der Klappe in diesem Maße reduziert ist. Durch die zwei Scharnierachsen des Anlenkungsscharniers der Klappe wird zudem vermieden, dass angrenzende Verkleidungsteile beschädigt werden oder dass die Klappe beim Aufschwenken an die angrenzenden Teile anstößt und nicht vollständig öffnet. Auch bei dickeren Verkleidungen erlaubt die erfindungsgemäße doppelachsige Scharnieranbindung ein vollständiges und freies Aufschwenken der Klappe, ohne dass sie hierbei durch angrenzende Bereiche blockiert wird. Unter Scharnier wird vorliegend jedes Verbindungsmittel verstanden, welches eine Schwenkbewegung eines angelenkten Teils um mindestens zwei Schwenkachsen erlaubt. Das erfindungsgemäße Scharnier kann als starres, doppelgelenkiges Scharnier ebenso ausgebildet sein wie auch als ein flexibles, bandartiges Klappenscharnier. Die mindestens zwei Scharnierachsen können durch jedes hierfür bekannte Mittel realisiert sein und beispielsweise als Sollbiegestellen in einem Blechstreifen gebildet sein, welcher die Klappe mit dem angrenzenden Verkleidungsteil verbindet. Andere Scharnierarten mit Schwenklagern können ebenso verwendet werden.

Die Airbagabdeckung weist eine Trägerschicht auf, wobei die Trägerschicht im Bereich des Scharniers mindestens eine Freisparung aufweist. Durch die Freisparung kann die Stärke der beim Auslösen des Airbags wirkenden Querkräfte gesteuert werden, da die Leichtigkeit der Betätigung des Scharniers durch gezielt vorgesehene Freisparungen einstellbar ist.

Gemäß einer vorteilhaften Ausgestaltung der Erfindung ist das Scharnier aus einem gegen Zug widerstandsfähigen Material gebildet. Für das Umlenken eines Teils der vom Airbag selbst herrührenden Öffnungskräfte beim Wegreißen der Airbag-Klappe ist es lediglich erforderlich, dass über die doppelte Anlenkungsachse die Klappe zunächst in eine Querrichtung zur Öffnungsrichtung gezogen wird, um hierdurch das Aufreißen der Sollrissbereiche am vom Scharnier gegenüberliegenden Bereich der Klappe zu erleichtern. Hierfür ist es erforderlich, dass das erfindungsgemäße Scharnier mit mindestens zwei Scharnierachsen in Längsrichtung nicht dehnbar ausgebildet ist. Dies wird dadurch erreicht, dass ein mindestens gegen Zug widerstandsfähiges Material für das Scharnier oder den Scharnierbereich verwendet wird. Bei Verwenden eines nachgiebigen, flexiblen Materials für das Scharnier entstehen an den Anbindungspunkten zu dem angrenzenden, starren Verkleidungsteil und der Klappe automatisch zwei Scharnierachsen im Sinne der vorliegenden Erfindung. Beim Auslösen des Airbags wird die Klappe zunächst angehoben und hierbei durch das doppelgelenkige Scharnier in Richtung weg von den Sollrissstellen gezogen, bis diese vollständig abreißen. Dann wird die erfindungsgemäße Airbag-Klappe um die zweite Scharnierachse weiter geschwenkt, wobei die ' Beschleunigung der Klappe dabei reduziert ist, da ein Teil der Öffnungskräfte zum Abreißen der Klappe verbraucht wurde. Die erfindungsgemäße Airbagabdeckung öffnet damit schneller und kontrollierter als bisherige Airbag-Klappen.

Nach einer weiteren vorteilhaften Ausgestaltung der Erfindung weisen das Verkleidungsteil und die Klappe je ein Verstärkungsblech auf, mit welchem das Scharnier direkt verbunden ist. Das Scharnier kann hierbei als ein brückenartiges Blechteil zwischen den Verstärkungsblechen ausgebildet sein. Die direkte Verbindung mit den Verstärkungsblechen, welche in der Regel mit Kunststoffschaum und/oder Verkleidungsfolien umgossen ist, erlaubt einen sicheren Halt und eine sichere Befestigung der Klappe bei der explosionsartigen Auslösung des Airbags. Das erfindungsgemäße Scharnier mit zwei Scharnierachsen kann auch aus einem anderen Material und getrennt realisiert sein und mit den Verbindungsblechen über jedes bekannte Verbindungsmittel, wie zum Beispiel Nieten, Schrauben, Verschweißung oder dergleichen, befestigt sein.

Nach einer weiteren vorteilhaften Ausgestaltung der Erfindung ist das erfindungsgemäße Scharnier mit zwei Scharnierachsen einstückig mit den Verstärkungsblechen geformt, und die Scharnierachsen X, Y sind als Sollbiegestellen im blechartigen Material ausgebildet. Hierdurch ist die Herstellung der Airbagabdeckung denkbar einfach und erfordert keine zusätzlichen Montage- und Befestigungsschritte der Klappe an dem Verkleidungsteil. Die Sollbiegestellen, welche die Scharnierachsen X, Y bilden, können beispielsweise durch Materialausschnitte und verjüngte Bereiche im Randbereich des Verstärkungsblechs des Verkleidungsteils und demjenigen der Klappe gebildet werden. Die Sollbiegestellen können ebenso mittels longitudinaler, nutartiger Vertiefungen im Blechmaterial hergestellt werden.

Nach einer weiteren vorteilhaften Ausgestaltung der Erfindung ist das Scharnier als ein fangbandartiges Scharnier aus Metall oder Kunststoff ausgebildet. Für die erfindungsgemäße Umlenkung eines Teils der Öffnungskräfte des Airbags in das Aufreißen begünstigende Querkräfte ist es lediglich erforderlich, dass am Scharnier zwei Gelenkachsen vorgesehen sind. Die Anbindungspunkte eines fangbandartigen Scharniers an dem starr ausgebildeten Verkleidungsteil und der Klappe bilden auch bei flexibler Ausbildung des Scharniers solche parallel zueinander verlaufenden, doppelten Scharnierachsen. Da der einmal ausgelöste Airbag die Klappe von sich aus in der Öffnungsstellung hält, ist es nicht erforderlich, dass die Scharniere der Klappe starr ausgebildet sind. Die fangbandartige Ausbildung des Scharniers aus Metall oder Kunststoff ist kostengünstig in der Herstellung. Hierbei sind keine Laserschneid-, Stanz- oder Biegeoperationen erforderlich, wie es bei einem als Blechband ausgebildeten Scharnier der Fall ist. Nach einem diesbezüglichen Aspekt ist das Scharnier aus einem Metallgewebe oder einem Kunststoffgewebe oder aus einer Metall-Kunststoffmischung hergestellt. Die Scharniere sind somit flexibel und erleichtern die Anpassung und die Montage der Airbagabdeckung.

Nach einer weiteren vorteilhaften Ausgestaltung der Erfindung ist der Abstand zwischen den mindestens zwei Scharnierachsen X, Y auf die Dicke des angrenzenden Verkleidungsteils der Innenraumverkleidung des Fahrzeugs angepasst. Während beim anfänglichen Auslösen des Airbags die Klappe um die Scharnierachse X auf Seiten des Verkleidungsteils geschwenkt und dabei angehoben und seitlich weggezogen wird, schwenkt die Klappe anschließend um die Scharnierachse Y auf Seiten der Airbag-Klappe, und zwar ohne dass es zu einer Blockierung der Schwenkbewegung aufgrund des Verstärkungs- und Trägermaterials des Verkleidungsteils kommt. Die Öffnung mittels des erfindungsgemäßen Scharniers mit zwei Scharnierachsen bewirkt so ein doppeltes Umklappen am Scharnier, ohne dass das angrenzende Verkleidungsteil der Innenraumverkleidung des Fahrzeugs beschädigt wird. Mühsame und kostenintensive Reparaturen nach einem Auslösen des Airbags werden so vermieden.

Nach einer weiteren vorteilhaften Ausgestaltung der Erfindung ist die Breite des Scharniers abgestimmt zum Erzeugen von vorbestimmten Querkräften F_{Q} innerhalb des Temperaturbereiches eines Einsatzes des Airbags. Die Breite des Scharniers, das beispielsweise als Blechband realisiert sein kann, wird hierbei derart gewählt, dass die entstehenden Querkräfte beim Auslösen des Airbags innerhalb der Einsatztemperaturen des Airbags durch einen höheren oder geringeren Widerstand an den Scharnierachsen gesteuert werden. Je geringer die Breite des Scharniers ist, desto größer sind die Querkraftkomponenten in der Anfangsphase der Auslösung des Airbags. Auf diese Weise kann das Scharnier auf die jeweiligen Verhältnisse optimal eingestellt werden und beispielsweise auch in Abhängigkeit der Haltekräfte der Sollrissbereiche oder Sollbruchstellen eingestellt werden.

Nach einer weiteren vorteilhaften Ausgestaltung der Erfindung ist mindestens ein Durchbruch in dem Material des Scharniers vorgesehen zum Steuern der auf die Klappe wirkenden Querkräfte in der Öffnungsphase des Airbags. Mittels der Durchbrüche oder des mindestens einen Durchbruchs in dem Scharnier oder dem Scharnierbereich können die beim Öffnen im Scharnier wirkenden Kräfte gesteuert werden, da hierdurch die Schwenkeigenschaften und die Stärke der Energieaufnahme in dem erfindungsgemäßen Scharnier mit zwei Scharnierachsen einstellbar sind. Ein Durchbruch in dem Scharnier begünstigt eine Verformung gegenüber einem gleichen Scharnier ohne Durchbruch. Diese Verformung führt beim Aufreißen und Anheben der Klappe zu einer stärkeren oder geringeren Energieaufnahme innerhalb des Scharniers.

Nach einem vorteilhaften Aspekt der Erfindung ist die Freisparung in der Trägerschicht im Bereich des Scharniers unterschiedlich auf Seiten des Verkleidungsteils einerseits und auf Seiten der Klappe andererseits zum Steuern der Stärke der wirkenden Querkräfte beim Auslösen des Airbags. Zum Beispiel kann die Freisparung größer und tiefer sein auf Seiten des Verkleidungsteils als diejenige auf Seiten der Klappe. Dies begünstigt ein Erzeugen von Querkräften in der Anfangsphase und damit ein Aufreißen der Airbag-Klappe und dämpft dennoch die weitergehende Öffungs-Schwenkbewegungen der Klappe, sodass eine überproportionale Beschleunigung beim Wegschleudern der Klappe und damit etwaige Beschädigungen der Windschutzscheibe oder dergleichen vermieden werden.

Nach einer weiteren vorteilhaften Ausgestaltung der Erfindung ist das Scharnier an dem Verkleidungsteil und an der Klappe an gegenüberliegenden Seiten der Trägerschicht befestigt. Hierdurch wird eine Art Materialsprung durch das Scharnier erzeugt, wodurch ebenfalls die Kräfte und insbesondere die Richtung der beim Auslösen des Airbags erzeugten Querkräfte gesteuert werden können, sodass ein optimales Aufreißverhalten und damit ein schnelles Auslösen des Airbags gewährleistet ist.

Weitere Vorteile und Merkmale der Erfindung sind der nachfolgenden detaillierten Beschreibung zu entnehmen, in welcher die Erfindung mehr im Detail in Bezug auf die in den beigefügten Zeichnungen dargestellten Ausführungsbeispiele beschrieben wird.

In der Zeichnung zeigen:
- Fig. 1: eine schematische Seitenansicht eines Ausführungsbeispiels einer erfindungsgemäßen Airbagabdeckung im geschlossenen Zustand und im Bewegungsablauf nach dem Auslösen des Airbags;
- Fig. 2: eine ausschnittsweise Draufsicht eines Ausführungsbeispiels eines erfindungsgemäßen Verstärkungsblechs mit integral ausgebildetem, bandartigem Scharnier; und
- Fig. 3a, 3b, 3c: schematische Seitenansichten von weiteren Ausführungsbeispielen einer erfindungsgemäßen Airbagabdeckung mit Freisparungen in der Trägerschicht und unterschiedlich geformten Scharnieren mit doppelten Scharnierachsen X, Y.

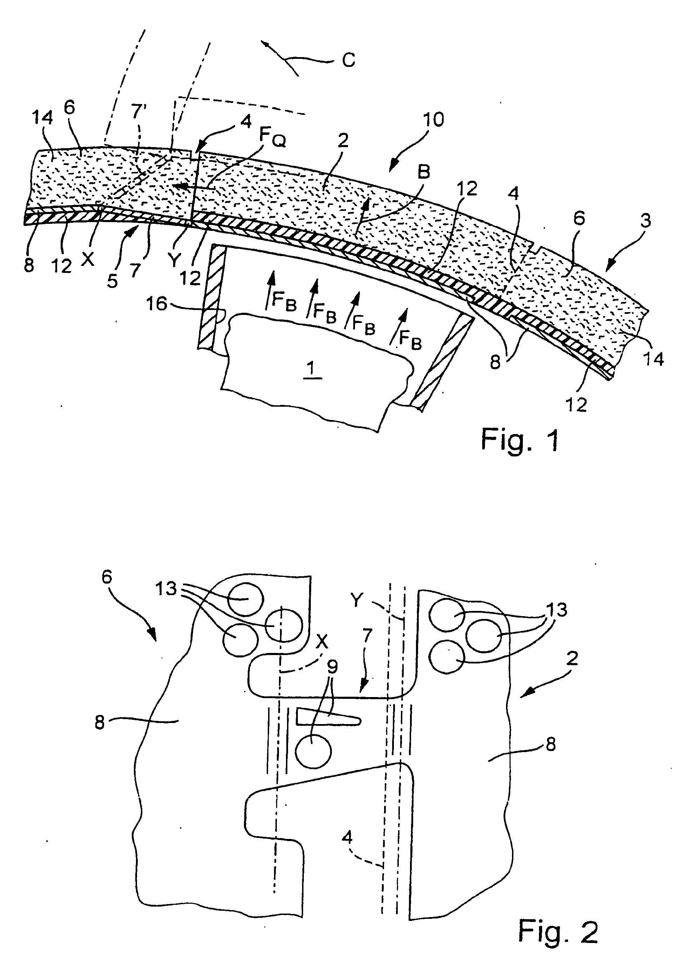

Die Fig. 1 zeigt in einer schematischen Seitenansicht das Funktionsprinzip der erfindungsgemäßen Airbagabdeckung an einem ersten Ausführungsbeispiel. Die Airbagabdeckung 10 ist vorgesehen zum Abdecken und Verschließen eines Airbags 1, der sich hinter einer Innenraumverkleidung 3 im Innenraum eines Kraftfahrzeugs befindet. Der Airbag 1 befindet sich hier im Ruhezustand, das heißt vor der Auslösung im Falle einer Kollision, im Inneren eines Airbag-Aufnahmeraums 16, der mit einem im Wesentlichen bündig mit den Verkleidungsteilen 6 der Innenraumverkleidung 3 abschließenden Airbag-Klappe 2 verschlossen ist. Beim Auslösen des Airbags 1 wird die Klappe 2 mittels dafür vorgesehener Sollrissbereiche 4 oder Sollbruchstellen weggerissen und gibt so den Weg für ein vollständiges Aufblasen des Airbags in den Innenraum der Fahrgastzelle (Richtung Pfeil B) frei. Die Klappe 2 wird also beim Auslösen des Airbags 1 durch den Airbag selbst entfernt, das heißt durch den explosionsartig sich aufpumpenden Gassack, der aus dem Airbag-Aufnahmeraum 16 herausgepresst wird. Damit die weggerissene Airbag-Klappe 2 nicht zu einer Verletzung der Insassen in der Fahrgastzelle führt, werden derartige Klappen 2 einseitig mittels Verbindungselementen 5 an dem angrenzenden Verkleidungsteil 6 gehalten. Es ergibt sich eine schwenkende Öffnungsbewegung C der Klappe, vorzugsweise in Richtung nach oben innerhalb der Fahrgastzelle auf die Windschutzscheibe (nicht dargestellt) hin. Die erfindungsgemäße Airbagabdeckung 10 weist hierfür ein spezifisches Verbindungselement 5 in Form eines Scharniers 7 auf, das um zwei parallele Achsen X, Y schwenkbar ist.

Das Scharnier 7 ist in diesem Ausführungsbeispiel zwischen den Verstärkungsblechen 8 eines Verkleidungsteils 6 und der Klappe 2 montiert und bildet zwei Scharnierachsen X, Y aus, um welche die Klappe 2 beim Öffnen jeweils schwenkbar ist. Das erfindungsgemäße Scharnier 7 mit zwei Scharnierachsen X, Y kann auch an anderen Teilen als dem Verstärkungsblech 8 befestigt sein, solange der feste Halt zwischen der Klappe 2 und dem angrenzenden Verkleidungsteil 6 gewährleistet ist. Das Scharnier 7 ist bei diesem Ausführungsbeispiel im unteren Bereich an dem Verkleidungsteil 6 und der Klappe 2 angelenkt. Auf Seiten des Verkleidungsteils 6 (linkerhand in Fig. 1) ist die Anlenkung über die Scharnierachse X am Verstärkungsblech 8 oberhalb einer Trägerschicht 12 vorgesehen. Auf Seiten der Airbag-Klappe 2 hingegen erfolgt bei diesem Ausführungsbeispiel die Anlenkung über die Scharnierachse Y an dem Verstärkungsblech 8 der Klappe 2, das unterhalb einer Trägerschicht 12 vorgesehen ist. Der Materialsprung oder Wechsel zwischen oberhalb und unterhalb der Trägerschicht 12 erlaubt ein spezifisches Einstellen der nachfolgend beschriebenen Öffnungs- und Schwenkbewegung gemäß der erfindungsgemäßen Airbagabdeckung 10. Nach einem Auslösen des Airbags 1 wird in der Anfangsphase die Klappe 2 zunächst in Öffnungsrichtung B angehoben, wobei aufgrund des doppelgelenkigen Scharniers 7 sofort eine Querkraft F_{Q} rechtwinklig zur eigentlichen Betätigungskraft F_{B} erfindungsgemäß erzeugt wird. Da in diesem Zustand die Sollrissstelle 4 gegenüber dem Scharnier 7 noch nicht vollständig abgerissen ist, kann mit der so erzeugten Querkraft F_{Q} der Abreißvorgang beim Öffnen des Airbags 1 erleichtert und schneller ausgeführt werden. Die Querkraft F_{Q} zieht die Klappe 2 in diesem Zustand von der Sollrissstelle 4 weg, während bei herkömmlichen, derartigen Airbagabdeckungen lediglich eine linear nach außen gerichtete Öffnungsbewegung (quer zur Längsrichtung der Airbagabdeckung) zum Abreißen der Sollrissbereiche 4 erzeugt wird, die zu erhöhten Kräften und einer überproportionalen Beschleunigung beim anschließenden Aufschwenken der Klappe 2 führt und damit leicht zu einer Beschädigung der Windschutzscheibe oder angrenzender Teile führen kann. Erfindungsgemäß wird dies durch das Scharnier 7 mit zwei Scharnierachsen X, Y vermieden, da einerseits ein Teil der Betätigungskraft F_{B} in eine Querkraftkomponente F_{Q} umgewandelt wird und diese zudem andererseits durch den hierdurch erfolgten Abreißvorgang abgebaut wird. Die resultierende Schwenkkraft in Schwenkrichtung C ist dadurch entsprechend reduziert bzw. gedämpft. Außerdem kann die erfindungsgemäße Klappe 2 der Airbagabdeckung 10 vollständig aufschwenken und gibt daher den Airbag 1 ohne Behinderung vollständig frei, da auch bei relativ dicken Verkleidungsteilen mit einem Schaum 14 oberhalb der Trägerschicht 12 die Klappe 2 nicht an dem angrenzenden Verkleidungsteil 6 anstößt. Das Scharnier 7 kann dabei jede hierfür geeignete Form aufweisen, solange es mindestens zwei Scharnierachsen X, Y aufweist und angepasst ist, die durch den Airbagdruck sich öffnende Klappe 2 in der Anfangsphase der Öffnung weg von dem Sollrissbereich 4 in eine Querrichtung zu ziehen. Beispielsweise kann das Scharnier 7 als ein Blechband zwischen einem Verstärkungsblech 8 einerseits der Klappe 2 und andererseits des Verkleidungsteils 6 ausgebildet sein. Andere Formen können ebenso passen, zum Beispiel flexible, fangbandartige Scharniere oder Scharniere aus einem Metallgewebe, Kunststoffgewebe oder einer Mischung von beidem. Kunststoffgewebe sind kostengünstig herzustellen und sind in einem größeren Toleranzbereich einsetzbar. Mit der erfindungsgemäßen Airbagabdeckung wird auf konstruktiv äußerst einfache Weise eine schnellere Öffnung des Airbags ermöglicht, die beispielsweise im Bereich von lediglich 5 ms liegen kann. Außerdem wird aufgrund der teilweisen Energieabsorption durch Erzeugen einer für das Aufreißen verwendeten Querkraftkomponente F_{Q} eine überproportionale Beschleunigung beim Öffnen in Richtung C vermieden, sodass angrenzende Bauteile im Fahrzeug nicht beschädigt werden und die Verletzungsgefahr von Insassen verringert ist. In Fig. 1 sind gestrichelt und punkt-gestrichelt verschiedene Stellungen der Schwenkbewegung C der Klappe 2 angedeutet. Das Scharnier 7 bewirkt zunächst ein schräges Aufstellen der Klappe 2auf Seiten des Scharniers 7, da am gegenüberliegenden Ende die Rissbereiche 4 noch halten. Hierdurch wird in der Anfangsphase unmittelbar eine Querkraft erzeugt. Erst nach dem Abreißen wird die eigentliche Schwenkbewegung der Klappe 2 bei geringerer Dynamik ausgeführt.

Die Fig. 2 zeigt in einer ausschnittweisen Draufsicht ein weiteres Ausführungsbeispiel der erfindungsgemäßen Airbagabdeckung mit einem als Blechband geformten Scharnier 7 zwischen der Klappe 2 und dem Verkleidungsteil 6. Ebenso wie bei dem zuvorigen Ausführungsbeispiel kann die Anzahl der vorgesehenen Scharniere 7 an der Airbagabdeckung je nach Bedarf variieren, und beispielsweise können zwei oder auch mehr als zwei erfindungsgemäße Verbindungselemente mit doppelgelenkigem Scharnier 7 vorgesehen sein. Bei dem in Fig. 2 gezeigten Beispiel ist das Scharnier 7 einstückig mit den Verstärkungsblechen 8 der Klappe 2 und des Verkleidungsteils 6, an welchem die Klappe 2 angebunden ist, ausgebildet. Das Scharnier bzw. der Scharnierbereich 7 ist hier als eine brückenartige Verbindung zwischen den jeweiligen Verstärkungsblechen 8 vorgesehen, wobei auch hier je zwei Scharnierachsen X, Y jeweils an dem Verkleidungsteil 6 und an der Airbag-Klappe 2 ausgebildet sind. Die Scharnierachsen X, Y können beispielsweise in Form von Sollbiegestellen durch Materialreduzierungen realisiert sein oder durch spezifische Freisparungen einer mit dem Verstärkungsblech 8 verbundenen, starren Trägerschicht (nicht dargestellt in Fig. 2) hergestellt werden. Bei diesem Ausführungsbeispiel sind in der Mitte des Scharniers 7 zwei Durchbrüche 9 vorgesehen, die ein Einstellen der Schwenkeigenschaften und -kräfte der Klappe 2 beim Auslösen des Airbags ermöglichen. Die Durchbrüche 9 bieten aufgrund der leichteren Verformbarkeit des Scharniers 7 an diesem Bereich eine verstärkte Energieaufnahme, sodass die resultierende Schwenkkraft in Schwenkrichtung C dementsprechend verringert ist. Auf diese Weise kann mittels des erfindungsgemäßen Scharniers die Schwenkbewegung gedämpft und gleichzeitig der Abreißvorgang der Airbagabdeckung erleichtert werden. Die Größe und Form der Durchbrüche 9 dient somit indirekt einem Einstellen der beim Öffnen erzeugten Querkräfte F_{Q}.

Alternativ kann das Scharnier 7 in seiner Breite variiert werden, um den Widerstand und damit die Energieaufnahme und die beim Öffnen wirkenden Kräfte zu variieren. Gleichermaßen kann die Einbindung des Scharniers 7 in die angrenzenden Trägerschichten oder Schaumschichten variiert werden, indem beispielsweise Freisparungen der Trägerschicht in dem Bereich des Scharniers vorgesehen werden (vgl. Fig. 1). Wesentlich für die Erfindung ist, dass mittels des Scharniers 7 die durch den Airbag 1 erzeugten Öffnungskräfte F_{B} zumindest teilweise in eine Querkraftkomponente F_{Q} umgeleitet werden, weshalb das Scharnier mindestens gegenüber Zug widerstandsfähig ausgebildet sein muss. Die Fig. 2 zeigt weiterhin im oberen Bereich der Verstärkungsbleche 8 jeweils drei Durchbrüche 13, die dem Verbinden mit den angrenzenden Schichten, wie zum Beispiel eine Trägerschicht 12, eine Schaumschicht 14 oder dergleichen, dienen. Das erfindungsgemäße Blechteil 7, 8 mit zwischengeschaltetem bandartigem Scharnier mit doppelter Anlenkungsachse X, Y kann auf jede hierfür bekannte Art und Weise hergestellt werden, zum Beispiel durch Laserschneiden oder durch Stanzen. Gleiches gilt für die Sollrißbereiche 4 der Airbagabdeckung 10.

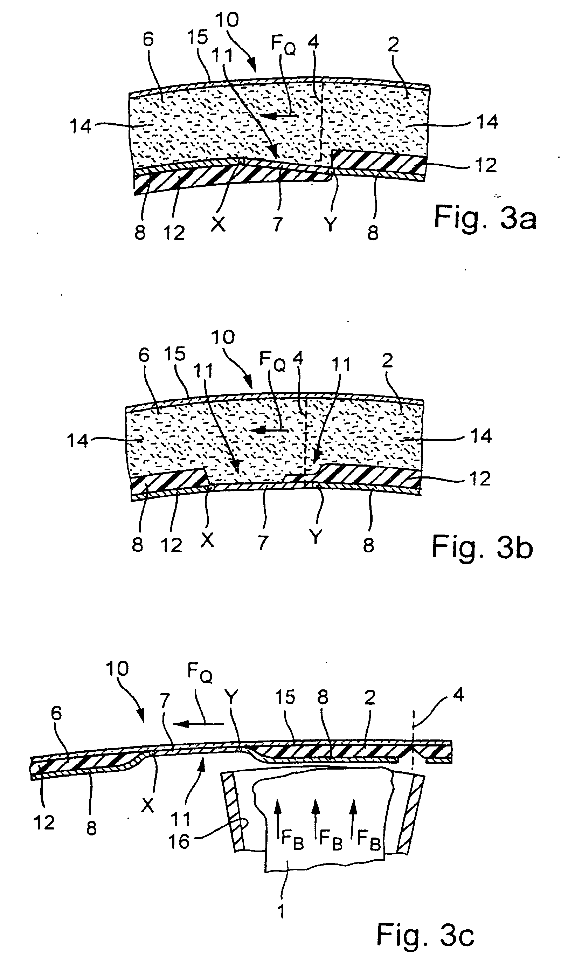

Die Fig. 3a, 3b und 3c zeigen weitere Ausführungsbeispiele in jeweiligen Seitenansichten und ausschnittsweise für Formen und Montagearten eines erfindungsgemäßen Scharniers 7. In Fig. 3a ist das Scharnier 7 auf Seiten des feststehenden Verkleidungsteils 6 an einem Verstärkungsblech 8 über die Anlenkungsachse X verbunden, wobei sich das Blech 8 hier oberhalb einer Trägerschicht 12 befindet. Auf der Seite der Airbag-Klappe 2 ist das Scharnier 7 ebenfalls an einem Verstärkungsblech 8 angelenkt (Anlenkungsachse Y). Hier ist jedoch das Verstärkungsblech 8 unterhalb der Trägerschicht 12 vorgesehen. Auf diese Weise ergibt sich eine Art Materialsprung, durch den die Eigenschaften und die beim Öffnen entstehenden Querkräfte F_{Q} beeinflusst werden können. Die Trägerschicht 12 erstreckt sich auf der Unterseite bis hin zu der Anlenkungsachse X, wohingegen auf der Oberseite im Bereich des Scharniers 7 eine Freisparung 11 vorgesehen ist. Das Scharnier 7 selbst kann als fangbandartiges Scharnier, als Blechbrücke mit Sollbiegestellen an den Anlenkungsachsen X, Y oder auf jede andere, dem Fachmann hierfür bekannte Art und Weise realisiert sein. Die Schicht aus Schaum 14 ist auf der in den Fahrgast-Innenraum weisenden Oberseite mit einer Dekorschicht oder Kaschierung 15 versehen, welche auch den Sollrissbereich 4 vollständig überdeckt. Die Trägerschicht 12 ist aus einem Material gebildet, das gegenüber dem Schaum 14 steifer und fester ist, jedoch leichter als das Material des Versteifungsblechs 8. Für die Trägerschicht 12, den Schaum 14 und die Kaschierung 15 können vorzugsweise Kunststoffmaterialien verwendet werden, wohingegen das Verstärkungsblech 8 und das Scharnier 7 vorzugsweise aus einem Metallblech, wie zum Beispiel einem Aluminiumblech, gebildet sind. Das Scharnier 7 kann jedoch auch ebenso aus Kunststoffmaterialien oder einem Verbundwerkstoff hergestellt sein. Die Anbindung und Befestigung des Scharniers 7 an dem Verkleidungsteil 6 und der Klappe 2 kann auf jede andere Art und Weise als der dargestellten erfolgen, beispielsweise durch Verschweißen oder Verschrauben.

In Fig. 3b ist ein weiteres Ausführungsbeispiel in einer schematischen, ausschnittweisen Seitenansicht wiedergegeben. Bei diesem Ausführungsbeispiel ist das Scharnier 7 je mit einem Verstärkungsblech 8 am Verkleidungsteil 6 und der Klappe 2 verbunden, das sich unterhalb einer Trägerschicht 12 befindet. Im Bereich des Scharniers 7 sind spezifische Freisparungen 11 vorgesehen, um die Stärke und die Form der beim Abreißvorgang wirkenden Kräfte spezifisch zu beeinflussen. Auf Seiten der Scharnierachse X ist die Trägerschicht 12 abrupt beendet. Auf Seiten der Klappe 2 ist die Trägerschicht 12 stufenweise verringert. Die Bewegungsfreiheit des Scharniers 7 ist an der Scharnierachse X daher größer als diejenige an der Scharnierachse Y. Für das anfängliche Aufreißen (Schwenken hauptsächlich um Achse X) der Klappe 2 ist der Schwenkvorgang somit erleichtert. Beim anschließenden Umklappen der Klappe 2 zum vollständigen Öffnen der Airbagabdeckung 10 (Schwenken um Achse Y) wird die Schwenkbewegung durch die teilweise noch vorhandene Trägerschicht 12 hier gedämpft, sodass eine zu starke Beschleunigung und damit Beschädigung von angrenzenden Teilen innerhalb des Fahrzeuges vermieden wird.

Auch die Fig. 3c zeigt in einer schematischen, teilweisen Seitenansicht ein weiteres Ausführungsbeispiel einer erfindungsgemäßen Airbagabdeckung im Bereich des Scharniers 7. Im Unterschied zu den vorherigen Ausführungsbeispielen ist hier keine Schaumschicht 14 vorgesehen, sodass die Trägerschicht 12 direkt mit einer Kaschierung 15 abgedeckt ist. Im Bereich des Scharniers 7 ist eine durchgehende Freisparung vorgesehen, sodass hier das Scharnier 7 direkt an der Kaschierung oder Dekorschicht 15 anliegt. Das Scharnier 7 weist hier die Form eines ausgestülpten oder muldenartig ausgeformten Bereichs auf, der die Freisparung 11 der Trägerschicht 12 ausfüllt. An den Knickstellen dieser Ausformung bilden sich die Scharnierachsen X, Y, sodass die Funktionsweise auch hier derart ist, dass anfänglich die Betätigungskraft F_{B} des Airbags 1 zunächst zu einem leichten Anheben der Klappe 2 in Richtung nach außen führt (scharnierseitig), wobei aufgrund der zwei Scharnierachsen X, Y unmittelbar durch die Hebelarme des Scharniers 2 eine Querkraft F_{Q} erzeugt wird, die das Abreißen der Klappe 2 an der Sollbruchstelle 4 begünstigt und beschleunigt. Erst nach dem völligen Abreißen wird die Klappe 2 dann in die eigentliche Schwenkrichtung C um die Schwenkachse Y gedreht, wobei die verbleibende Öffnungsenergie aufgrund der beim Abreißvorgang bereits verwendeten Kräfte deutlich reduziert ist. Ein unkontrolliertes Wegschleudern und starkes Beschleunigen der Airbagabdeckung 10 wird so wirksam vermieden. Auch hier können die Form des Scharniers, die Form und Größe der Freisparung 11 und die Ausgestaltung der Scharnierachsen X, Y spezifisch ausgewählt werden, um die erzeugten Kräfte beim Öffnungsvorgang entsprechend zu steuern. Das Scharnier 7 kann auch hier als fangbandartiges, flexibles Element oder als starres Schwenkscharnier mit zwei Anlenkungspunkten ausgebildet sein und jede hierfür geeignete Form aufweisen, solange beim anfänglichen Öffnen der noch nicht vollständig abgerissenen Airbag-Klappe 2 eine Kraftkomponente quer zur eigentlichen Öffnungsrichtung erzeugt wird durch die Hebelarme des doppelt angelenkten Schwenkscharniers oder Scharnierbereichs 7.

Sämtliche in der Beschreibung, den nachfolgenden Ansprüchen sowie in der Zeichnung dargestellten Merkmale und Elemente können sowohl einzeln als auch in beliebiger Kombination miteinander erfindungswesentlich sein.

## Patentansprüche

1. Airbagabdeckung (10) für einen Airbag (1), welcher innerhalb eines Aufnahmeraums (16) einer Innenraumverkleidung (3) eines Kraftfahrzeugs vorgesehen ist,
mit einer Klappe (2), einem Verbindungselement (5) und einem Verkleidungsteil (6),
wobei die Klappe beim Auslösen des Airbags (1) geöffnet wird und den Airbag (1) im geschlossenen Zustand über Sollrissbereiche oder -stellen (4) verschlossen hält, und
wobei die Klappe (2) über das Verbindungselement (5) am Verkleidungsteil (6) der Innenraumverkleidung (3) angelenkt ist,
wobei das Verbindungselement (5) mindestens ein Scharnier (7) mit mindestens zwei Scharnierachsen (X, Y) derart aufweist, dass am Beginn der Öffnungsphase des Airbags (1) einen Teil der in Öffnungsrichtung (B) wirkenden Betätigungskräfte (F_{B}) des Airbags (1) in eine quer zur Öffnungsrichtung (B) wirkende Querkraft (F_{Q}) umgeleitet wird, **dadurch gekennzeichnet, dass** eine Trägerschicht (12) vorgesehen ist, welche im Bereich des Scharniers (7) mindestens teilweise eine die Stärke der beim Auslösen des Airbags (1) wirkenden Querkräfte (F_{Q}) steuernde Freisparung (11) aufweist.

2. Airbagabdeckung (10) nach Anspruch 1,
**dadurch gekennzeichnet,**
**dass** das Scharnier (7) aus einem gegenüber Zug widerstandsfähigen, aber nachgiebig flexiblen Material derart gebildet ist, dass an den Anbindungspunkten zum angrenzenden, starren Verkleidungsteil (6) und der Klappe (2) automatisch die beiden Scharnierachsen (X, Y) entstehen.

3. Airbagabdeckung (10) nach Anspruch 1 oder 2,
**dadurch gekennzeichnet,**
**dass** das Verkleidungsteil (6) und die Klappe (2) je ein Verstärkungsblech (8) aufweisen, mit welchem das Scharnier (7) direkt verbunden ist.

4. Airbagabdeckung (10) nach Anspruch 3,
**dadurch gekennzeichnet,**
**dass** das Scharnier (7) einstückig mit den Verstärkungsblechen (8) und die Scharnierachsen (X, Y) als Sollbiegestellen in den Blechen (7, 8) ausgebildet sind.

5. Airbagabdeckung (10) nach einem der vorherigen Ansprüche,
**dadurch gekennzeichnet,**
**dass** das Scharnier (7) als fangbandartiges Scharnier aus Metall oder Kunststoff ausgebildet ist.

6. Airbagabdeckung (10) nach einem der vorherigen Ansprüche,
**dadurch gekennzeichnet,**
**dass** das Scharnier (7) aus Metallgewebe oder Kunststoffgewebe gebildet ist.

7. Airbagabdeckung (10) nach einem der vorherigen Ansprüche,
**dadurch gekennzeichnet,**
**dass** der Abstand zwischen den parallelen Scharnierachsen (X, Y) auf die Dicke des Verkleidungsteils (6) derart angepasst ist, dass die Klappe (2) vollständig aufschwenken und den Airbag (1) ohne Behinderung vollständig freigeben kann.

8. Airbagabdeckung (10) nach einem der vorherigen Ansprüche,
**dadurch gekennzeichnet,**
**dass** das Scharnier (7) in seiner Breite variiert, um den Widerstand und damit die Energieaufnahme und die beim Öffnen wirkenden Kräfte zu variieren.

9. Airbagabdeckung (10) nach einem der vorherigen Ansprüche,
**dadurch gekennzeichnet,**
**dass** in dem Material des Scharniers (7) mindestens ein Durchbruch (9) vorgesehen ist zum Steuern der auf die Klappe (2) wirkenden Querkräfte (F_{Q}) in der Öffnungsphase der Airbagabdeckung (10).

10. Airbagabdeckung (10) nach einem der vorherigen Ansprüche,
**dadurch gekennzeichnet,**
**dass** die Freisparung (11) im Bereich des Scharniers (7) abwechselnd auf unterschiedlichen Seiten bezüglich des Verstärkungsblechs (8) jeweils am Verkleidungsteil (6) und der Klappe (2) vorgesehen ist zum Steuern der Stärke der in der Öffnungsphase wirkenden Querkräfte (F_{Q}) zum Aufreißen der Sollrissbereiche (4).

11. Airbagabdeckung (10) nach einem der vorherigen Ansprüche,
**dadurch gekennzeichnet,**
**dass** das Scharnier (7) an dem Verkleidungsteil (6) und an der Klappe (2) an gegenüberliegenden Seiten einer Trägerschicht (12) jeweils befestigt ist.

## Claims

1. An airbag cover (10) for an airbag (1) provided inside a receptacle (16) in the paneling (3) of the interior of a motor vehicle,
having a flap (2), a connecting element (5) and a paneling element (6),
wherein the flap is opened when the airbag (1) is triggered and, along predetermined tearing areas or tearing places (4), maintains the airbag (1) closed in the closed state, and wherein the flap (2) is hinged on the paneling element (6) of the paneling (3) of the interior by means of the connecting element (5),
wherein the connecting element (5) has a hinge (7) with at least two hinge axes (X, Y) such that, during the beginning of the opening phase of the airbag (1), a portion of the actuating forces (F_{B}) of the airbag (1) acting in the opening direction (B) is converted into a transverse force (F_{Q}) acting transversely in respect to the opening direction (B), **characterized in that** a support layer (12) is provided which, in the area of the hinge (7), has an at least partial relief (11) which controls the strength of the transverse forces (F_{Q}) acting when the airbag (1) is triggered.

2. The airbag cover (10) in accordance with claim 1,
**characterized in that**
the hinge (7) is made of a material which is resistant to tension, but resiliently flexible, in such a way that the two hinge axes (X, Y) are automatically created at the connecting points with the adjoining rigid paneling element (6) and the flap (2).

3. The airbag cover (10) in accordance with claim 1 or 2,
**characterized in that**
the paneling element (6) and the flap (2) each have a sheet metal reinforcement piece (8), with which the hinge (7) is directly connected.

4. The airbag cover (10) in accordance with claim 3,
**characterized in that**
the hinge (7) is embodied in one piece with the sheet metal reinforcement piece (8), and the hinge axes (X, Y) are embodied as predetermined braking points in the sheet metal pieces (7, 8).

5. The airbag cover (10) in accordance with one of the preceding claims,
**characterized in that**
the hinge (7) is embodied as a rebounding strap-like hinge, made of metal or plastic.

6. The airbag cover (10) in accordance with one of the preceding claims,
**characterized in that**
the hinge (7) is made of woven metal or woven plastic.

7. The airbag cover (10) in accordance with one of the preceding claims,
**characterized in that**
the spacing between the parallel hinge axes (X, Y) is matched to the thickness of the paneling element (6) in such a way that the flap (2) can be completely pivoted open and can release the airbag (1) without hindrance and completely.

8. The airbag cover (10) in accordance with one of the preceding claims,
**characterized in that**
the hinge (7) varies in width in order to vary the resistance, and therefore the energy absorption and the forces acting during opening.

9. The airbag cover (10) in accordance with one of the preceding claims,
**characterized in that**
at least one opening (9) for controlling the transverse forces (F_{Q}) acting on the flap (2) in the opening phase of the airbag cover (1) is provided in the material of the hinge (7).

10. The airbag cover (10) in accordance with one of the preceding claims,
**characterized in that**,
for controlling the strength of the transverse forces (F_{Q}) for tearing open the predetermined tearing areas (4) acting during the opening phase, the relief (11) in the area of the hinge (7) is alternatingly provided respectively in the paneling element (6) and the flap (2) on different sides in respect to the sheet metal reinforcement piece (8).

11. The airbag cover (10) in accordance with one of the preceding claims,
**characterized in that**
the hinge (7) is respectively fastened on the paneling element (6) and on the flap (2) at opposite sides of a support layer (12).

## Revendications

1. Revêtement d'airbag (10) destiné à un airbag (1), qui est prévu à l'intérieur d'un espace de logement (16) d'un habillage d'habitacle (3) d'un véhicule,
comportant un volet (2), un élément de raccordement (5) et un élément d'habillage (6),
moyennant quoi le volet est ouvert lors du déclenchement de l'airbag (1) et maintient resserré l'airbag (1) à l'état fermé par l'intermédiaire de zones ou emplacements de fissure théorique (4), et moyennant quoi le volet (2) est articulé par l'intermédiaire de l'élément de raccordement (5) sur l'élément d'habillage (6) de l'habillage de l'habitacle (3),
moyennant quoi l'élément de raccordement (5) présente au moins une charnière (7) dotée d'au moins deux axes de charnière (X, Y), de telle sorte que, au début de la phase d'ouverture de l'airbag (1), certaines forces d'actionnement (F_{B}) s'exerçant dans la direction d'ouverture (B) de l'airbag (1) sont converties en forces transversales (F_{Q}) s'exerçant transversalement par rapport à la direction d'ouverture (B), **caractérisé en ce qu'**on prévoit une couche support (12), qui présente, dans la zone de la charnière (7), au moins en partie un évidement (11), régulant l'intensité des forces transversales (F_{Q}) s'exerçant lors du déclenchement de l'airbag (1).

2. Revêtement d'airbag (10) selon la revendication 1, **caractérisé en ce que** la charnière (7) est réalisée dans une matière résistante à la traction, mais flexible et élastique, de telle sorte que, au niveau des points de liaison avec l'élément d'habillage (6) adjacent, rigide et le volet (2), les deux axes de charnière (X, Y) apparaissent automatiquement.

3. Revêtement d'airbag (10) selon la revendication 1 ou 2, **caractérisé en ce que** l'élément d'habillage (6) et le volet (2) présentent respectivement une tôle de renforcement (8), à laquelle est reliée directement la charnière (7).

4. Revêtement d'airbag (10) selon la revendication 3, **caractérisé en ce que** la charnière (7) est réalisée d'une seule pièce avec les tôles de renforcement (8), et les axes de charnière (X, Y) sont configurés sous la forme de points de flexion théorique dans les tôles (7, 8).

5. Revêtement d'airbag (10) selon l'une quelconque des revendications précédentes, **caractérisé en ce que** la charnière (7) est configurée sous la forme d'une charnière de type bande de sûreté constituée de métal ou de matière plastique.

6. Revêtement d'airbag (10) selon l'une quelconque des revendications précédentes, **caractérisé en ce que** la charnière (7) est configurée sous la forme d'une toile métallique ou d'une toile en matière plastique.

7. Revêtement d'airbag (10) selon l'une quelconque des revendications précédentes, **caractérisé en ce que** la distance entre les deux axes de charnière parallèles (X, Y) est adaptée à l'épaisseur de l'élément d'habillage (6) de telle sorte que le volet (2) peut complètement pivoter vers le haut et peut libérer complètement l'airbag (1) sans entrave.

8. Revêtement d'airbag (10) selon l'une quelconque des revendications précédentes, **caractérisé en ce que** la charnière (7) voit sa largeur varier afin de faire varier la résistance et donc l'absorption d'énergie et les forces s'exerçant lors de l'ouverture.

9. Revêtement d'airbag (10) selon l'une quelconque des revendications précédentes, **caractérisé en ce que**, dans la matière de la charnière (7), est au moins prévu un ajour (9) afin de réguler les forces transversales (F_{Q}) s'exerçant sur le volet (2) durant la phase d'ouverture du revêtement d'airbag (10).

10. Revêtement d'airbag (10) selon l'une quelconque des revendications précédentes, **caractérisé en ce que** l'évidement (11) est ménagé, dans la zone de charnière (7), de manière alternée sur les différentes faces par rapport à la tôle de renforcement (8) respectivement sur l'élément d'habillage (6) et sur le volet (2) afin de réguler l'intensité des forces transversales (F_{Q}) s'exerçant durant la phase d'ouverture pour permettre le déchirement des zones de fissure théorique (4).

11. Revêtement d'airbag (10) selon l'une quelconque des revendications précédentes, **caractérisé en ce que** la charnière (7) est fixée respectivement sur l'élément d'habillage (6) et sur le volet (2) au niveau des faces opposées d'une couche support (12).
